Europäisches Patentamt

European Patent Office

Office européen des brevets

(19)

(11) Numéro de publication : **0 032 365**
**B1**

(12) FASCICULE DE BREVET EUROPÉEN

(45) Date de publication du fascicule du brevet :
17.10.84

(51) Int. Cl.³ : **H 04 Q   1/457, H 04 M  19/02**

(21) Numéro de dépôt : 81100003.3

(22) Date de dépôt : 02.01.81

(54) **Dispositif de contrôle d'un générateur numérique de signaux.**

(30) Priorité : 09.01.80 FR 8000388

(43) Date de publication de la demande :
22.07.81 Bulletin 81/29

(45) Mention de la délivrance du brevet :
17.10.84 Bulletin 84/42

(84) Etats contractants désignés :
AT BE CH DE FR GB IT LI LU NL SE

(56) Documents cités :
FR-A- 2 345 023
COMMUTATION ET ELECTRONIQUE, no. 59 octobre
1977 Paris FR H. CAMPAGNO et al.: "Système E 10.
L'equipment de tonalités et auxiliaires", pages 99-
115

(73) Titulaire : **COMPAGNIE INDUSTRIELLE DES TELE-
COMMUNICATIONS CIT-ALCATEL S.A. dite:**
**12, rue de la Baume**
**F-75008 Paris (FR)**

(72) Inventeur : **Duplessis, Philippe**
**14, avenue Adrienne**
**F-92700 Colombes (FR)**
Inventeur : **Jouannet, Denis**
**184, rue du Faubourg Saint Antoine**
**F-75012 Paris (FR)**

(74) Mandataire : **Weinmiller, Jürgen et al**
**Zeppelinstrasse 63**
**D-8000 München 80 (DE)**

**0 032 365**

## Description

L'invention concerne un dispositif permettant le contrôle en fonctionnement d'un générateur numérique, notamment d'un générateur de signaux sinusoïdaux. Elle est applicable dans les industries de l'électronique et des télécommunications, en particulier dans les centraux téléphoniques à commutation temporelle.

Les générateurs numériques sont utilisés principalement pour l'émission de signalisation suivant les différents codes multifréquences. Ils permettent, en commutation temporelle, de traiter les signaux et de les véhiculer sur les liaisons à multiplexage temporel dans les mêmes conditions que les signaux de parole.

Dans ces conditions un générateur numérique est capable d'une part d'émettre les différents signaux possibles pour chacun des codes utilisés, et d'autre part d'émettre les signaux en temps partagé sur plusieurs canaux vers plusieurs destinataires.

Dans les systèmes de contrôle connus, le contrôle se fait par prélèvement du signal au niveau des canaux destinataires, et comparaison du signal prélevé au signal programmé. Le contrôle est donc assez complexe du fait qu'il se fait canal par canal et pour chaque signal de chacun des codes utilisés.

L'invention a pour but de réaliser un dispositif qui permet un contrôle permanent du signal de sortie du générateur sans séparation des canaux et sans tenir compte des signaux programmés.

L'invention a pour objet un dispositif de contrôle d'un générateur numérique de signaux qui sont des combinaisons linéaires de signaux sinusoïdaux dont les fréquences sont définies chacune par un coefficient proportionnel à la fréquence correspondante, le générateur comportant des moyens de stockage desdits coefficients correspondant à tous les signaux émis, les coefficients comportant une partie entière et une partie fractionnaire dont le nombre de chiffres définit la plus petite valeur possible des coefficients, qui correspond à un signal de fréquence minimale fm telle que tous les signaux émis par le générateur aient une fréquence multiple de la fréquence fm, caractérisé par le fait qu'il comporte un circuit de calcul de redondance relié à la sortie du générateur, et un moyen de comparaison comparant la redondance calculée par le circuit de calcul avec une valeur théorique enregistrée.

Le dispositif selon l'invention permet d'effectuer un contrôle global par redondance à chaque période du générateur sans disposer d'aucune référence de phase.

Un contrôle beaucoup plus fin peut être réalisé en partant d'un état initial connu. Un circuit de calcul de redondance en sortie du générateur permet alors de comparer la redondance calculée par le circuit à une redondance théorique calculée une fois pour toute, ceci avec une périodicité qui est un sous-multiple de la période de base du générateur. On a donc la possibilité d'effectuer un contrôle aussi serré qu'on le souhaite.

L'invention va être précisée par la description, donnée ci-après, d'un mode préféré de réalisation de l'invention, à titre d'exemple, en référence aux figures du dessin annexé dans lequel :

la figure 1 représente le diagramme d'un dispositif de contrôle d'un générateur suivant l'invention,
la figure 2 est un schéma plus détaillé du dispositif de la figure 1,
la figure 3 est un diagramme des temps.

Considérons un générateur numérique multifréquences qui émet des combinaisons linaires de signaux sinusoïdaux. Les fréquences des signaux sinusoïdaux sont généralement définies par un coefficient numérique. Dans bien des cas, le coefficient K est proportionnel à la fréquence désirée f :

$$K = af, \text{ ou} : f = Kfo \text{ en posant } fo = 1/a.$$

En pratique K est un nombre enregistré sous forme binaire avec une partie entière à n e. b et une partie fractionnaire à p e. b. de la forme :

$$K = \sum_{i=0}^{n-1} k_i \, 2^i + \sum_{J=1}^{P} k_j \, 2^{-j}$$

n + p représente la capacité du registre ou du mot mémoire où K est enregistré. fo représente une fréquence de base liée à celle de la base de temps qui commande le générateur. Si l'on se réfère par exemple au cas d'un générateur du type décrit dans le brevet français n° 2 098 528 de la Demanderesse, le signal est fourni par exploration d'une mémoire contenant la table des valeurs successives à pas constant de la fonction Y = sin x. Dans ce cas fo peut être pris égal à la fréquence de lecture de la table.

En pratique, il existe donc une valeur minimale du coefficient K, déterminée par le nombre de e. b. de la partie fractionnaire : Km = $2^{-P}$.

K est toujours un multiple m de Km soit :

$$f = m \, Kmfo.$$

2

On en déduit que toutes les fréquences engendrées par le générateur sont des multiples de la fréquence minimum

$$fm = 2^{-P} fo.$$

Le générateur possède donc une période de base indépendante des fréquences émises en sortie, et qui ne dépend que de la fréquence fo et de la résolution du générateur. En particulier lorsque le générateur travaille en partage de temps, la période globale du signal de sortie est la même que celle des échantillons fournis sur l'un des canaux temporels.

La forme de réalisation décrite ici concerne un générateur du type indiqué dans le brevet français déjà cité, utilisé en temps partagé.

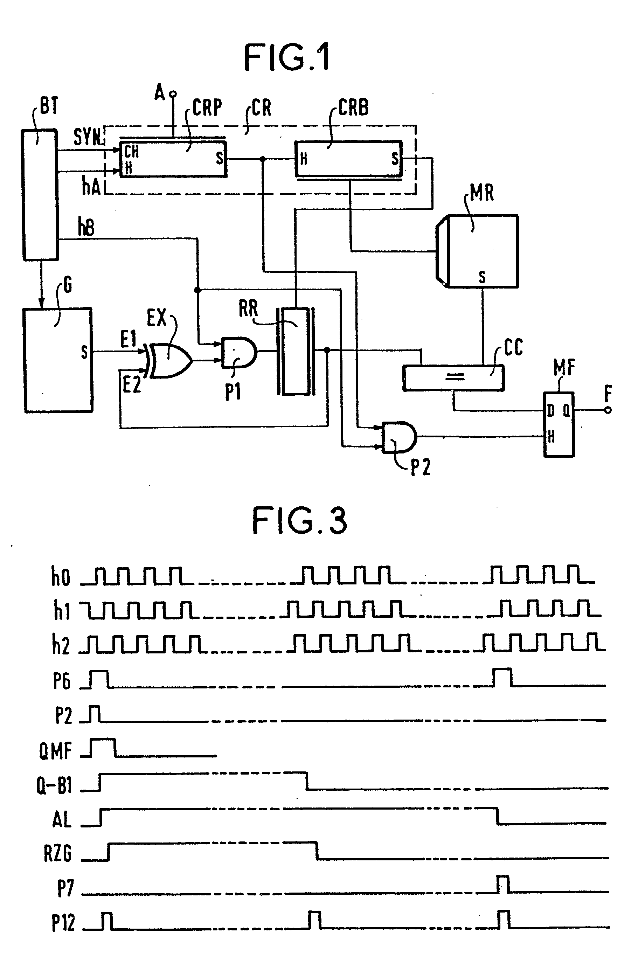

Comme représenté sur la figure 1, le générateur G est piloté par une base de temps BT et délivre à sa sortie S, q signaux en série. Chaque échantillon de signal est formé par exemple d'un octet délivré en parallèle. Au cours d'un cycle complet, que l'on appellera trame, le générateur délivre donc q octets. Les échantillons sont délivrés en sortie S au rythme d'un signal $h_A$ de la base de temps. Ce signal $h_A$ commande un compteur CR de capacité CA égale au rapport de la période T du générateur telle qu'elle a été définie plus haut, à la période t du signal hA : CA = T/t.

Dans cette application les informations sont contrôlées en sortie du générateur par un circuit de calcul de redondance portant sur un bloc de b trames, soit bq octets.

Le compteur CR est constitué de deux compteurs en série :
— un compteur de pas CRP de capacité q × b
— un compteur de bloc CRB qui progresse à chaque nouveau bloc.

La redondance théorique de chaque bloc est enregistrée dans une mémoire morte MR adressée par le compteur CRB. Le circuit de calcul de redondance est constitué d'un registre de stockage de la redondance courante RR et d'un groupe de portes « OU Exclusif » EX recevant sur le groupe d'entrées $E_1$ les échantillons en sortie S du générateur, et sur le groupe d'entrées $E_2$ la redondance précédente en sortie du registre RR.

Le chargement du registre RR en sortie des portes EX est contrôlé par un groupe de portes « ET » P1 validé par un signal $h_B$ de la base de temps. Le signal $h_B$ a la même période que $h_A$ avec un décalage permettant la stabilisation des circuits.

Les sorties du registre RR et de la mémoire MR sont reliées à un comparateur CC dont la sortie est marquée en cas de non-concordance entre les entrées. La sortie du comparateur CC est reliée à l'entrée de données d'une bascule de marquage de faute MF de type D. L'entrée d'horloge de la bascule est commandée par une porte « ET » P2 recevant le signal $h_B$ et la sortie du compteur CRP.

Un test de la redondance est aussi effectué à chaque bloc. La synchronisation nécessaire du compteur CRP et du générateur G est réalisée par un signal SYN de la base de temps reçu par l'entrée de chargement CH du compteur CRP qui permet de charger une valeur câblée A. D'autre part le registre RR est remis à zéro en fin de cycle en sortie du compteur CR.

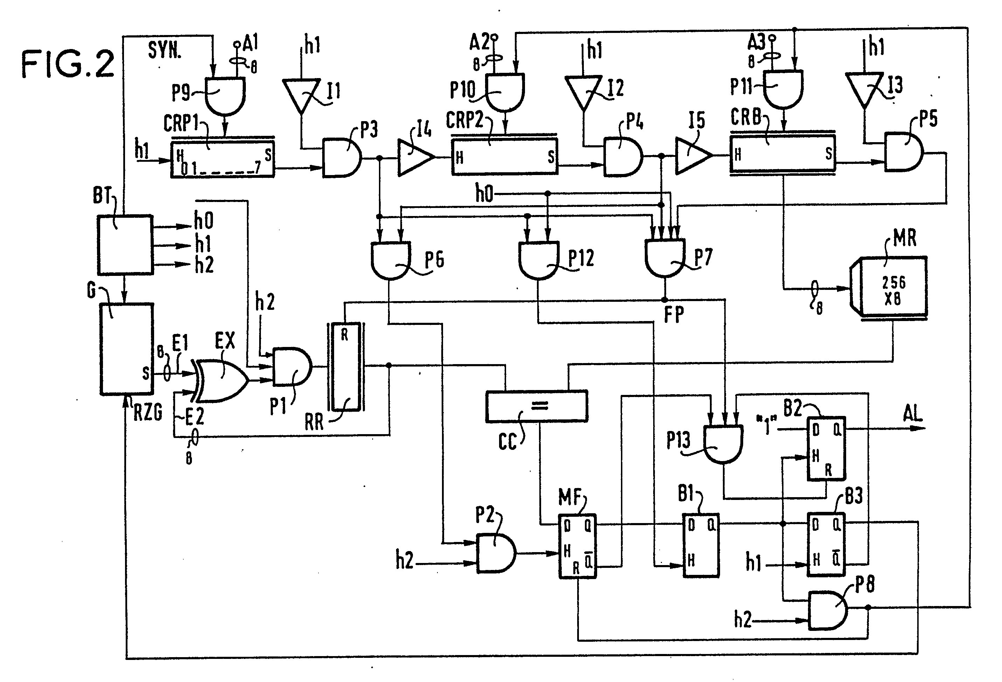

Le fonctionnement détaillé du dispositif sera donné à l'aide des figures 2 et 3.

L'exemple donné concerne un générateur à 128 canaux pour un central temporel utilisant des liaisons multiplex MIC aux normes européennes, c'est-à-dire organisées en trames de 32 voies de 8 e. b., avec une fréquence de trame de 8 kHz. Le générateur comporte une table de Sinus de 1 024 mots de 16 e. b. (10 e. b. de partie entière, 6 e. b. de partie fractionnaire). La table est balayée au rythme de l'horloge 8 kHz.

Dans ces conditions la période de base T du générateur est égale à $1\,024 \times 2^6/8\,000 = 8{,}192$ s.

Au cours de cette période le générateur délivre sur les 128 canaux : $128 \times 1\,024 \times 2^6 = 2^{23}$ octets.

On effectuera par exemple 256 contrôles par période. La capacité de la mémoire MR est donc de 256 octets et le compteur CRB est un compteur binaire à 8 e. b. Chaque contrôle concerne un bloc de $2^{15}$ octets.

En pratique, le compteur CR est piloté par l'horloge $h_1$ (figure 3) à la fréquence de base du MIC européen qui fournit $32 \times 8 = 256$ signaux par trame. Le générateur délivre un octet tous les 2 pas de l'horloge $h_1$ et le compteur CR a $2^{24}$ pas. Le compteur CRP est formé de 2 compteurs à 8 e. b. (CRP1, CRP2) en série.

Les portes $P_1$ sont validées par le signal $h_2$ et l'e. b. de poids 1 du compteur CRP1. Le système de marquage de fautes permet une réinitialisation automatique du générateur dans les conditions suivantes :
— la détection d'une faute déclenche une alarme et commande la remise à zéro des mémoires du générateur
— l'alarme est supprimée seulement après une période complète du générateur sans nouvelle détection de faute.

Le dispositif comporte les circuits complémentaires représentés à la figure 2.

Les sorties des 3 compteurs CRP1, CRP2, CRB sont synchronisées sur le front descendant de l'horloge $h_1$ (groupes de portes « ET » P3 à P5, inverseurs $I_1$ à $I_5$). Le signal de fin de bloc en entrée de la porte P2 est donné par les portes P3 et P4 et une porte P6. Un signal de fin de période FP est donné par une porte « ET » P7 commandée par les portes P3 à P5 et le signal d'horloge $h_0$. Le signal FP commande la remise à zéro du registre RR. Les signaux d'horloge $h_0$ $h_1$ $h_2$ de même période sont décalés d'un tiers d'instant de voie temporelle.

Le circuit de marquage de fautes MF comporte 4 bascules de type D (MF, B1, B2, B3). La sortie Q de la bascule MF commande l'entrée D de la bascule $B_1$. La sortie Q de la bascule B1 commande l'entrée D de la bascule B3 et l'entrée d'horloge H de la bascule B2. L'entrée D de la bascule B2 est maintenue à l'état 1. Les circuits comportent également :

— une liaison de signalisation d'alarme AL en sortie de la bascule B2

— une liaison RZG de commande d'initialisation du générateur en sortie de la bascule B3

— une porte P9 qui reçoit la valeur câblée A1 et le signal de synchronisation SYN pour le chargement du compteur CRP1 par les 8 e. b. d'initialisation

— une liaison de chargement des compteurs CRP2 et CRB commandée en sortie de la bascule B1, par une porte « ET » P8 validée par le signal $h_2$, et des groupes P10 et P11 permettant le chargement de valeurs câblées A2 et A3. La sortie de la porte P8 commande aussi la remise à zéro de la bascule MF

— l'entrée d'horloge de la bascule B1 est commandée en sortie de la porte P3 par une porte P12 contrôlée par le signal $h_0$

— l'entrée de remise à zéro de la bascule B2 est commandée par le signal FP à travers une porte « ET » P13 validée par les sorties inverseuses $\overline{Q}$ des bascules MF et B3.

Le chronogramme de la figure 3 montre les changements d'état des sorties Q des bascules (Q-MF, Q-B1 à Q-B3) en cas de faute.

Le signal sur la liaison RZG est maintenu jusqu'à la fin de la trame suivant la détection d'une faute, ce qui permet le redémarrage du générateur en phase avec le signal SYN de la base de temps.

Un avantage important du dispositif décrit réside dans le fait que l'utilisation du générateur en temps partagé et la programmation des signaux aiguillés vers les différents organes destinataires sont sans influence sur le contrôle, celui-ci opérant globalement sur le signal de sortie en amont des moyens d'aiguillage vers les organes destinataires.

Bien entendu l'invention n'est pas limitée à l'application décrite. On pourra remplacer les moyens décrits par des moyens équivalents. En particulier le type de code de contrôle utilisé et les conditions de marquage de faute et de remise en route automatique peuvent être adaptés à l'efficacité du contrôle recherchée, et au mode d'exploitation du générateur. Par exemple le contrôle peut être effectué seulement une fois par période, ou une fois pour plusieurs périodes du générateur.

## Revendications

1. Dispositif de contrôle d'un générateur numérique de signaux qui sont des combinaisons linéaires de signaux sinusoïdaux dont les fréquences sont définies chacune par un coefficient K proportionnel à la fréquence correspondante, le générateur comportant des moyens de stockage desdits coefficients correspondant à tous les signaux émis, lesdits coefficients comportant une partie entière et une partie fractionnaire dont le nombre de chiffres définit la plus petite valeur possible des coefficients, laquelle correspond à un signal de fréquence minimale fm telle que tous les signaux émis par le générateur aient une fréquence multiple de la fréquence fm, caractérisé par le fait qu'il comporte un circuit de calcul de redondance (EX, RR) relié à la sortie (S) du générateur (G), et au moyen de comparaison (CC) comparant la redondance calculée par le circuit de calcul avec une valeur théorique constante enregistrée.

2. Dispositif de contrôle suivant la revendication 1, dans lequel le générateur a une période de base T définie par la période d'un signal de fréquence fm, le générateur comportant un moyen d'initialisation, caractérisé par le fait qu'il comporte un compteur (CR) de capacité égale au nombre de signaux délivrés par le générateur dans une période T et synchronisé avec le générateur, et une mémoire (MR) adressée par ledit compteur et dans laquelle sont enregistrées les redondances théoriques calculées à des instants correspondant à des durées sous-multiples de la période à partir d'une initialisation du générateur, la sortie de la mémoire étant reliée à l'entrée d'un comparateur (CC) et l'état de la sortie du comparateur étant testé auxdits instants intermédiaires.

3. Dispositif de contrôle suivant la revendication 2 pour un générateur numérique délivrant en temps partagé des échantillons numériques vers q organes destinataires par l'intermédiaire de moyens d'aiguillage, caractérisé par le fait qu'il comporte un seul circuit de calcul de redondance relié à la sortie du générateur en amont desdits moyens d'aiguillage, et opérant globalement sur l'ensemble des signaux du générateur.

4. Dispositif suivant la revendication 2, caractérisé par le fait qu'il comporte des moyens de marquage de faute (MF, B1, B2) commandés par le comparateur, et des moyens de commande d'initialisation (B3) du générateur, validés en cas de faute.

5. Dispositif suivant la revendication 4, caractérisé par le fait qu'un marquage de faute est effacé après une période complète de fonctionnement sans nouvelle détection de faute.

## Claims

1. A device for supervising a digital generator of signals which are constituted by linear combinations of sine wave signals, the frequencies of which are each defined by a factor K proportional to the corresponding frequency, the generator comprising means for storing said factors which correspond to all the emitted signals, the factors being composed of an integer part and a fraction part, the number of digits defining the smallest possible factor value corresponding to a signal of minimum frequency fm, such that the signals emitted by the generator have a multiple frequency of the frequency fm, characterized in that it comprises a circuit (EX, RR) for calculating the redundancy connected to the output (S) of the generator (G), and a comparison means (CC) which compares the redundancy calculated by said circuit with a stored constant theoretical value.

2. A supervision device according to claim 1, in which the generator has a basic period T defined by the period of a signal of the frequency fm, the generator comprising an initialization means, characterized in that the device comprises a counter (CR), the counting capacity of which is equal to the number of signals delivered by the generator during a period T and which is synchronized with the generator, and that it comprises a memory (MR) which is addressed by said counter and in which the theoretical redundancies calculated at instants corresponding to submultiples of the period starting from an initialization of the generator are registered, the output of the memory being connected to the input of a comparator (CC) and the output state of the comparator being checked at said intermediate instants.

3. A supervision device according to claim 2 for a digital generator delivering, in time multiplex operation, digital samples to q destination organs via distribution means, characterized in that it comprises only one circuit for calculating the redundancy, this circuit being connected to the generator output upstream of said distribution means and operating globally on the set of generator signals.

4. A device according to claim 2, characterized in that it comprises fault marker means (MF, B1, B2) which are controlled by the comparator, and means (B3) for controlling the initialization of the generator which are activated in the case of a fault.

5. A device according to claim 4, characterized in that a marked fault is cancelled after one complete period of operation, if no further fault is detected.

## Ansprüche

1. Vorrichtung zur Überwachung eines digitalen Generators von Signalen, die lineare Kombinationen sinusförmiger Signale sind, deren Frequenzen je von einem der entsprechenden Frequenz proportionalen Koeffizienten K definiert werden, wobei der Generator Mittel zur Speicherung dieser allen ausgesandten Signalen entsprechenden Koeffizienten aufweist und die Koeffizienten einen ganzzahligen Teil und einen gebrochenen Teil aufweisen, dessen Ziffernanzahl den kleinstmöglichen Wert der Koeffizienten definiert, welcher einem Signal der minimalen Frequenz fm entspricht, so daß alle vom Generator ausgesandten Signale eine Vielfachfrequenz der Frequenz fm aufweisen, dadurch gekennzeichnet, daß sie einen Redundanzrechenkreis (EX, RR), der mit dem Ausgang (S) des Generators (G) verbunden ist, und ein Vergleichsmittel (CC) aufweist, das die vom Rechenkreis errechnete Redundanz mit einem registrierten konstanten theoretischen Wert vergleicht.

2. Überwachungsvorrichtung nach Anspruch 1, in der der Generator eine Basisperiode T besitzt, die durch die Periode eines Signals der Frequenz fm definiert ist, und der ein Mittel zur Initialisierung besitzt, dadurch gekennzeichnet, daß die Vorrichtung einen Zähler (CR), dessen Zählkapazität der Anzahl der von dem Generator in einer Periode T gelieferten Signale entspricht und der mit dem Generator synchronisiert ist, und einen Speicher (MR) aufweist, der von dem Zähler adressiert wird und in dem die theoretischen Redundanzen registriert sind, die zu Zeitpunkten berechnet werden, welche den Untervielfachen der Dauer der Periode ausgehend von einer Initialisierung des Generators entsprechen, wobei der Ausgang des Speichers an den Eingang eines Komparators (CC) angeschlossen ist und der Zustand des Ausgangs des Komparators zu den Zwischenzeitpunkten getestet wird.

3. Überwachungsvorrichtung nach Anspruch 2 für einen digitalen Generator, der im Zeitmultiplex digitale Tastproblem an q Empfangsorgane über Weichenmittel liefert, dadurch gekennzeichnet, daß sie einen einzigen Redundanzrechenschaltkreis aufweist, der an den Ausgang des Generators vor den Weichenmitteln angeschlossen ist und global auf die Gesamtheit der Generatorsignale einwirkt.

4. Vorrichtung nach Anspruch 2, dadurch gekennzeichnet, daß sie Mittel zur Markierung von Fehlern (MF, B1, B2), die vom Komparator gesteuert werden, und Mittel (B3) zur Initialisierung des Generators aufweist, die im Fehlerfall tätig werden.

5. Vorrichtung nach Anspruch 4, dadurch gekennzeichnet, daß eine Fehlermarkierung nach einer vollständigen Betriebsperiode ohne neue Fehlerentdeckung wieder gelöscht wird.

# FIG.1

# FIG.3

1

FIG.2

0 032 365